# EUROPEAN PATENT SPECIFICATION

(11) **EP 1 813 734 B1**
(45) Date of publication and mention of the grant of the patent: **09.11.2016**
(21) Application number: 06126196.2
(22) Date of filing: 15.12.2006
(51) Int. Cl.: E03F 1/00, F16L 55/052, F16L 55/04

(54) **Vacuum sewer system**
Vakuumabwassersystem
Système d'évacuation d'eau sous vide

(30) Priority: 30.01.2006 FI 20065059
(43) Date of publication of application: 01.08.2007
(73) Proprietor: Evac Oy, 02630 Espoo (FI)
(72) Inventor: Lindroos, Gunnar, FI-00950 Helsinki (FI); Lappalainen, Vesa, FI-01520 Vantaa (FI); Ylänen, Teemu, FI-00300 Helsinki (FI)
(74) Representative: Berggren Oy Ab

(56) References cited:
- EP-A- 1 130 180
- WO-A1-99/64778
- DE-A1- 4 136 931

## Description

The present invention relates to a vacuum sewer system comprising a sewage receptacle, sewer piping connected to the sewage receptacle by means of a discharge valve, a vacuum generating means for generating vacuum in the sewer piping, a control mechanism for controlling the discharge valve, and a vacuum buffer means, according to the preamble of claim 1.

In vacuum sewer systems, where the function of the sewage receptacle is governed by vacuum, the source of vacuum normally is the sewer piping, whereby vacuum for the control mechanism is usually taken at a point of the sewer piping adjacent the discharge valve in the flow direction of sewage. When the discharge valve is opened, the vacuum level is lowered due to atmospheric air entering the sewer piping. Consequently, the vacuum level available for the control mechanism and for governing the discharge valve may be too low for appropriately opening the discharge valve. If the vacuum sewer system further includes a rinse water arrangement with a vacuum governed water valve, the low vacuum level may impede the function of the water valve as well.

In the context of the present invention the sewage receptacle may be e.g. a toilet unit or toilet bowl, urinal, sink, wash basin, or shower. The sewage may be black water originating from e.g. a toilet unit or a urinal, or grey water originating from e.g. a sink, wash basin, or shower. The rinse water arrangement may be deployed depending upon the source of sewage.

Previously, to avoid this problem, a vacuum buffer means in the form of a vacuum container connected to the sewer piping has been used. Such a container, however, has to be rather large in order to be able to provide a sufficient additional vacuum volume. A large container requires additional space, and also extra piping or tubing. Further, installation of such a container within a sewage receptacle or a shell enclosing the same is more or less impossible due to the large size.

EP 1 130 180 A2 discloses a vacuum drainage system with a rigid chamber or tank in the vacuum piping, which chamber or tank has a larger cross-sectional area than the vacuum piping. The tank adds volume to the vacuum piping and thus provides a vacuum buffer means for the drainage system. This document is considered as representing the closest prior art.

A thin wall high pressure, volume compensator for pressurized fluent material system is disclosed in document WO 9964778. This compensator is not connected to a control means.

An object of the present invention is to achieve a vacuum sewer system in which the above disadvantages are avoided and which is provided with an effective vacuum booster. A further object of the present invention is to provide a vacuum buffer means, which improves the operation of the vacuum sewer system. These objects are attained by a vacuum sewer system according to claim 1.

The basic idea of the invention is to provide a vacuum sewer system with a vacuum buffer means that provides additional vacuum for governing the discharge valve, and optionally also the water valve, in an effective and timely manner. The vacuum buffer means comprises an active buffer device in fluid contact with the control mechanism and the sewer piping. The term active defines that the buffer device changes from a first mode to a second mode, whereby this change results in the desired raising of the vacuum level available for the control mechanism.

Claims 2 and 3 define advantageous installations of the active buffer device.

An advantageous arrangement for achieving the active criteria of the active buffer device is achieved by the active buffer device comprising an enclosure with a variable volume and a means for expanding the volume of the enclosure from a first mode to a second mode, and in that the enclosure is in fluid communication with a first tubing arranged between the control mechanism and the sewer piping through a flow port in order to induce a suction effect to the first tubing through the flow port.

Such a variable volume may be attained by having the enclosure of the active buffer device comprising a rigid cup formed part, a thereto attached flexible membrane, and the means for expanding the volume of the enclosure comprising a spring means.

Alternative forms of achieving such an enclosure may comprise an expandable bellows, two opposite flexible membranes attached to a tubular means, or a cylinder with a piston, whereby the means for expanding the volume of the enclosure comprises a spring means.

An advantageous arrangement for regulating the timing and duration of the suction effect may be achieved by providing the flow port with a nozzle, which may be dimensioned in order to provide a desired suction effect in combination with the spring means.

The vacuum sewer system may comprise a plurality of sewage receptacles, whereby the active buffer device may be installed within one or more sewage receptacles or within a shell enclosing such a sewage receptacle due to the small size of the active buffer device.

The active buffer device may advantageously be provided with a triggering means in order to more exactly control the timing of the raising of the vacuum level for the control mechanism.

The vacuum sewer system preferably comprises an activating means for activating the function of the control mechanism.

In the following the present invention is described in more detail, by way of example only, with reference to the attached schematic drawings, in which
Fig. 1 illustrates a vacuum sewer system,
Fig. 2 shows an embodiment of an active buffer device,
Fig. 3 illustrates the flow connections of the control unit of the vacuum sewer system provided with an active buffer device,
Fig. 4 shows alternative embodiments of an active buffer device, and
Fig. 5 illustrates the flow connections of the control unit of the vacuum sewer system provided with an alternative embodiment of a vacuum buffer device.

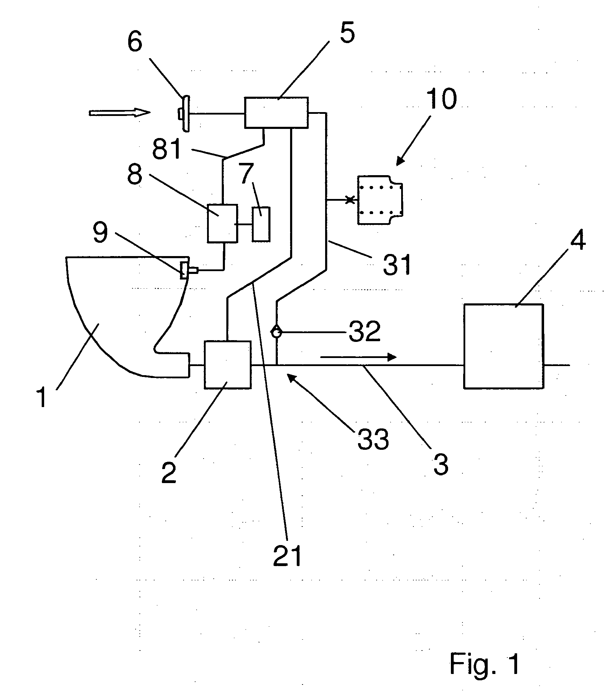

Fig. 1 illustrates in a general manner an embodiment of a vacuum sewer system comprising a sewage receptacle 1, sewer piping 3 connected to the sewage receptacle 1 by means of a discharge valve 2, and a vacuum generating means 4 for generating vacuum in the sewer piping 3. The vacuum sewer system is provided with a control mechanism 5 for controlling the discharge valve 2 and with a vacuum buffer means, which according to the present invention is an active buffer device 10. The vacuum sewer system may include a plurality of sewage receptacles with related discharge valves, (water valves), control mechanisms and active buffer devices, whereby the number of vacuum generating means may vary depending upon the layout and size of the whole system.

Vacuum sewer systems, including vacuum control mechanisms, are well known in the art and are not therefore explained in further detail in this connection.

The control mechanism 5 is connected to the sewer piping 3, at a point 33 adjacent the discharge valve 2 in the flow direction (indicated by an arrow) of the sewage, by means of a first tubing 31 and through a check valve 32. The control mechanism 5 is connected to the discharge valve 2 by means of a second tubing 21. The control mechanism 5 is also provided with an activating means 6, such as a push button or an infrared trigger device, for activating the control mechanism 5 in order to initiate a flushing or discharge sequence.

In this embodiment the sewage receptacle 1 is shown as a toilet bowl also provided with a rinse water arrangement comprising a water supply 7, a water valve 8 and a rinse water nozzle 9 in connection with the toilet bowl. The control mechanism 5 also governs the function of the water valve 8 and is connected thereto by means of a third tubing 81.

The sewage receptacle may also be a urinal, sink, washbasin, or a shower, as discussed above. The rinse water arrangement is optional and its use is dependent of the type of sewage receptacle.

The active buffer device 10 is connected to the first tubing 31, between the control mechanism 5 and the check valve 32. The active buffer device 10 provides a vacuum booster, or a pressure equalizer, for the vacuum sewer system in order to guarantee an appropriate and sufficient vacuum level for opening the discharge valve 2, and water valve 8, if deployed.

Fig. 1 is only a schematic illustration of a toilet unit. Usually, the toilet bowl is arranged within a shell portion, whereby also the discharge valve, water valve, control mechanism are arranged within the same shell, often supported by a frame structure. Clearly, there is not much space in such a shell. Due to the so-called "active" feature of the active buffer device, its volume may be kept rather small, whereby it may also be installed within the shell together with the other components. This is a clear advantage of the present invention. This advantage may also be realized in connection with other types of sewage receptacles.

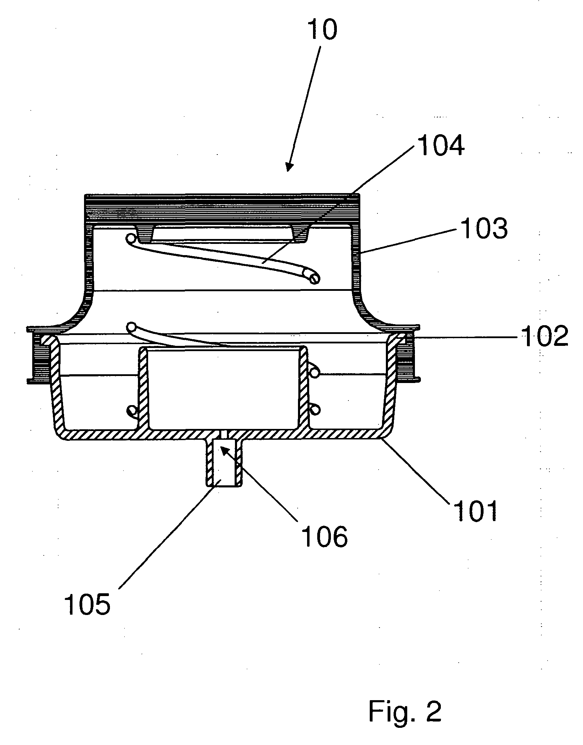

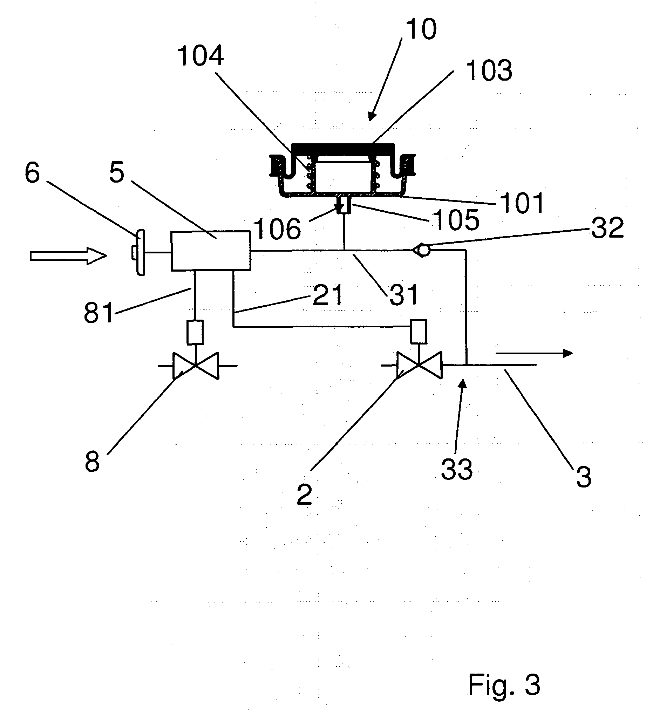

Fig. 2 shows an embodiment of an active buffer device 10, which forms an enclosure comprising a rigid cup formed part 101 with a thereto attached flexible membrane 103. The rigid cup formed part 101 is provided with a circumferential flange 102 to which the flexible membrane 103 is attached by a snap-fit. This enclosure is provided with an internal spring means 104. The active buffer device 10 thus has a variable volume, whereby the internal spring means 104 is arranged to expand the volume of the active buffer device 10 from a first mode (Fig. 3) to a second mode (Fig. 2).

Further, the rigid cup formed part 101 is provided with a flow port 105 which is arranged to be in fluid communication with the first tubing 31 at a point between the control mechanism 5 and the check valve 32 in order to introduce a suction effect to the first tubing 31 when the volume of the active buffer device 10 is expanded from the first mode to the second mode. The flow port 105 is provided with a nozzle 106 for regulating the flow. This suction effect raises the vacuum level in the first piping 31, and thereby raises the vacuum level available for the control mechanism 5 at the time when the discharge valve 2 is opened and remains open.

This function of the active buffer device 10 will now be discussed with reference to Fig. 3. When the vacuum sewer system is in a rest or stand-by state, vacuum at a given level is generated or maintained by the vacuum generation means 4 (Fig. 1) in the sewer piping 3. This vacuum level is also available in the first tubing 31 through the check valve 32 and connecting to the sewer piping at point 33 adjacent the discharge valve 2. When the flushing or discharge sequence is triggered by means of the activating means 6 (e.g. by pressing a push button as indicated by a block arrow), the control mechanism 5 forwards vacuum to the discharge valve 2 for opening the same. If a rinse water arrangement is deployed, the control mechanism 5 also forwards vacuum in a corresponding manner to the water valve 8 for opening the same.

However, when the discharge valve 2 is opened, there is a sudden drop in the vacuum level in the sewer piping 3 due to atmospheric air entering the discharge valve 2 from the sewage receptacle 1. This means that the vacuum level available for the opening of the discharge valve 2, and the water valve 8, if deployed, would not be sufficient for appropriately opening said valves. In the present invention, this is avoided by means of the active buffer device 10.

The flow port 105 of the active buffer device 10 is connected to the first tubing 31. When the vacuum level is lowered in the first tubing, pressure is exerted through the flow port 105 towards the flexible membrane 103, whereby the internal spring means 104 is triggered so that the active buffer device 10 is expanded from its first mode (Fig. 3) to its second mode (Fig. 2) causing a suction, i.e. a vacuum generation effect to the first tubing 31. This suction effect thus raises the vacuum level available to the control mechanism 5 and necessary for the appropriate opening of the discharge valve 2, and the water valve 8.

The advantages of the active buffer device according to the invention are that the active buffer device provides a sufficient vacuum level by a minimum volume, the control mechanism has a sufficient vacuum level although a number of sewage receptacles are discharged at the same time and further the risk of blockage in the discharge valve is reduced. The vacuum buffer device also functions as a pressure equalizer in the sewer piping and the tubing connected thereto.

A desired timing of the increase in the vacuum level by means of the active buffer device 10 may be achieved by an appropriate dimensioning of the suspension force of the spring means 104 and the dimension of the nozzle 106 in the flow port 105.

When the discharge valve 2 is closed, the vacuum level re-establishes in the sewer piping 3 and the first tubing 31, which results in the return of the active buffer device 10 to its first mode, i.e. its compressed state (Fig. 3), when the flexible membrane 103 is drawn towards the rigid cup formed part 101, at the same time compressing the spring means 104 for the following action.

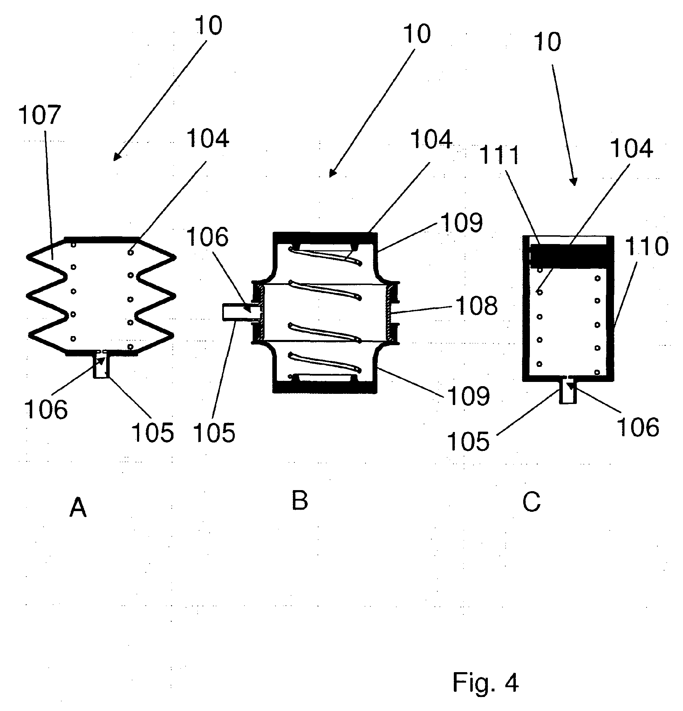

Fig. 4 shows, as example only, three alternative embodiments A, B and C of an active buffer device 10. All three embodiments are provided with an internal spring means 104 and a flow port 105 with an internal nozzle 106. The internal spring means may be replaced by e.g. an electrical magnet means.

Embodiment A comprises an enclosure with a variable volume provided by an expandable bellows 107 including the internal spring means 104. Embodiment B comprises an enclosure with a variable volume provided by two opposite flexible membranes 109 attached a tubular means 108 including the internal spring means 104. Embodiment C comprises an enclosure with a variable volume provided by a cylinder 110 with a piston 111 and including the internal spring means 104. The function of these three embodiments correspond to the function of the embodiment discussed in connection with Fig. 3.

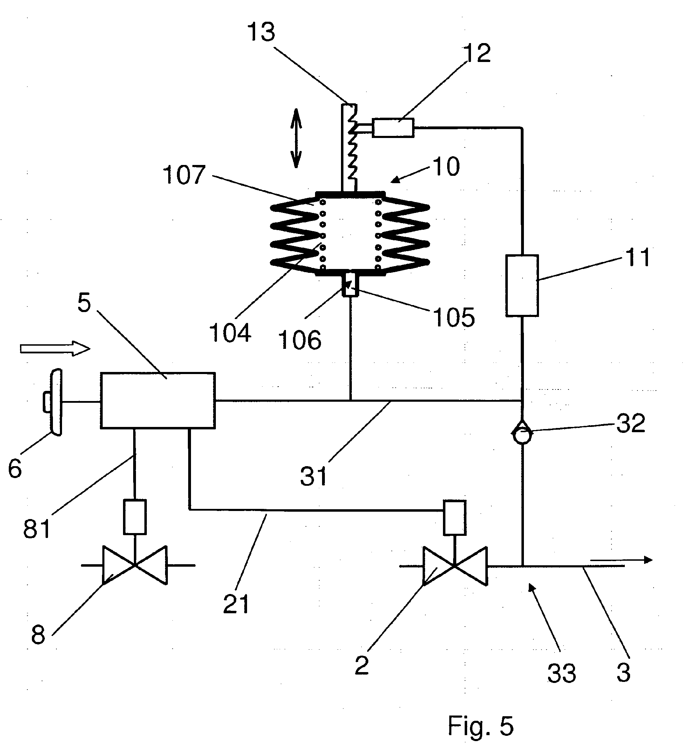

Fig. 5 illustrates the flow connections of the control unit of the vacuum sewer system provided with an alternative active buffer device 10 (embodiment A of Fig. 4) with a separate triggering means. The components and there to related reference numerals correspond to the ones discussed in connection with Fig. 3 and are therefore not discussed in detail in connection with this embodiment.

The triggering means comprises a pressure sensor 11 for detecting the pressure in the sewer piping 3. The pressure sensor 11 is connected to a trigger device 12 arranged for interaction with a locking device 13 connected to the active buffer device 10, an expandable bellows 107. When the vacuum sewer system is in a rest or stand-by state, a given vacuum level is present in the sewer piping 3 and the first tubing means 31. Consequently, when the opening of the discharge valve 2 is activated by the control mechanism 5, the vacuum level is lowered. At a given lowered vacuum level the pressure sensor 11 is arranged to trigger the trigger device 12, whereby the locking device 13 is released. This results in an expansion (increase of volume) of the expandable bellows 107 due to the force of the internal spring means 104 resulting in a suction effect through the flow port 105 to the first tubing 31 thereby raising the vacuum level available for the control mechanism 5.

A desired timing of the raising of the vacuum level may be achieved by a suitable dimensioning of the spring means 104 and the flow port 105 with the nozzle 106 as well as by defining a given lowered pressure for activating the pressure sensor 11. Corresponding triggering means may be used as well in connection with the other embodiments of the active buffer device described above.

The drawings and the description related thereto are only intended for clarification of the basic idea of the invention. The invention may vary in detail within the scope of the ensuing claims.

## Claims

1. Vacuum sewer system comprising a sewage receptacle (1), sewer piping (3) connected to the sewage receptacle by means of a discharge valve (2), a vacuum generating means (4) for generating vacuum in the sewer piping, a control mechanism (5) for controlling the discharge valve, and a vacuum buffer means, **characterised in that** the vacuum buffer means comprises an active buffer device (10) in fluid communication with the control mechanism (5) and the sewer piping (3), wherein the term active defines that the buffer device changes from a first mode to a second mode, providing additional vacuum for governing the discharge valve (2) when, in use, said discharge valve (2) is opened.

2. Vacuum sewer system according to claim 1, **characterised in that** the control mechanism (5) is in fluid communication with the sewer piping (3) through a check valve (32), that the control mechanism (5) is arranged to provide vacuum to the discharge valve (2) for opening the discharge valve in order to discharge the sewage receptacle (1), and **in that** the active buffer device (10) is arranged between the control mechanism (5) and the check valve (32) in order to provide additional vacuum to the control mechanism (5) for the opening of the discharge valve (2).

3. Vacuum sewer system according to claim 1, **characterised in that** the vacuum sewer system further comprises a water supply (7) for providing rinse water to the sewage receptacle (1), that the water supply (7) is connected to a rinse water nozzle (9) arranged in the sewage receptacle (1) through a water valve (8), that the control mechanism (5) is arranged to provide vacuum to the water valve (8) for opening the water valve in order to provide rinse water to the sewage receptacle, and **in that** the active buffer device (10) is arranged between the control mechanism (5) and the check valve (32) in order to provide additional vacuum to the control mechanism (5) for the opening of the water valve (8).

4. Vacuum sewer system according to claim 1, **characterised in that** the active buffer device (10) comprises an enclosure with a variable volume and a means for expanding the volume of the enclosure from a first mode to a second mode, and **in that** the enclosure is in fluid communication with a first tubing (31) arranged between the control mechanism (5) and the sewer piping (3) through a flow port (105) in order to induce a suction effect to the first tubing (31) through the flow port (105).

5. Vacuum sewer system according to claim 4, **characterised in that** the enclosure of the active buffer device (10) comprises a rigid cup formed part (101), a thereto attached flexible membrane (103), and **in that** the means for expanding the volume of the enclosure comprises a spring means (104).

6. Vacuum sewer system according to claim 4, **characterised in that** the enclosure comprises an expandable bellows (107), two opposite flexible membranes (109) attached to a tubular means (108), or a cylinder (110) with a piston (111), and **in that** the means for expanding the volume of the enclosure comprises a spring means (104).

7. Vacuum sewer system according to claim 4, **characterised in that** the flow port (105) comprises a nozzle (106).

8. Vacuum sewer system according to claim 1, **characterised in that** the vacuum sewer system comprises a plurality of sewage receptacles and **in that** the active buffer device (10) is installed separately within one or more sewage receptacles (1) or within a shell enclosing such a sewage receptacle (1).

9. Vacuum sewer system according to claim 1, **characterised in that** the active buffer device (10) is provided with a triggering means.

10. Vacuum sewer system according to claim 1, **characterised in that** the vacuum sewer system comprises an activating means (6) for activating the function of the control mechanism (5).

## Patentansprüche

1. Vakuumabwassersystem, umfassend ein Abwasserbehältnis (1), Abwasserverrohrung (3), die mithilfe eines Ablassventil (2) mit dem Abwasserbehältnis verbunden ist, ein Vakuumerzeugungsmittel (4) zum Erzeugen von Vakuum in der Abwasserverrohrung, einen Steuermechanismus (5) zum Steuern des Ablassventils und ein Vakuumpuffermittel, **dadurch gekennzeichnet, dass** das Vakuumpuffermittel eine aktive Puffervorrichtung (10) in Fluidverbindung mit dem Steuermechanismus (5) und der Abwasserverrohrung (3) umfasst, wobei der Begriff "aktiv" definiert, dass die Puffervorrichtung von einem ersten Modus in einen zweiten Modus wechselt, wodurch zusätzliches Vakuum zum Regeln des Ablassventils (2) vorgesehen ist, wenn das Ablassventil (2) im Gebrauch geöffnet wird.

2. Vakuumabwassersystem nach Anspruch 1, **dadurch gekennzeichnet, dass** der Steuermechanismus (5) über ein Rückschlagventil (32) mit der Abwasserverrohrung (3) in Fluidverbindung steht, dass der Steuermechanismus (5) zum Versehen des Ablassventils (2) mit Vakuum zum Öffnen des Ablassventils zum Ablassen des Abwasserbehältnisses (1) angeordnet ist, und dass die aktive Puffervorrichtung (10) zwischen dem Steuermechanismus (5) und dem Rückschlagventil (32) angeordnet ist, um den Steuermechanismus (5) zum Öffnen des Ablassventils (2) mit zusätzlichem Vakuum zu versehen.

3. Vakuumabwassersystem nach Anspruch 1, **dadurch gekennzeichnet, dass** das Vakuumabwassersystem ferner eine Wasserversorgung (7) zum Zuführen von Spülwasser zum Abwasserbehältnis (1) umfasst, dass die Wasserversorgung (7) über ein Wasserventil (8) mit einer Spülwasserdüse (9), die im Abwasserbehältnis (1) angeordnet ist, verbunden ist, dass der Steuermechanismus (5) zum Zuführen von Vakuum zum Wasserventil (8) zum Öffnen des Wasserventils angeordnet ist, um dem Abwasserbehältnis Spülwasser zuzuführen, und dass die aktive Puffervorrichtung (10) zwischen dem Steuermechanismus (5) und dem Rückschlagventil (32) angeordnet ist, um den Steuermechanismus (5) mit zusätzlichem Vakuum zum Öffnen des Wasserventils (8) zu versehen.

4. Vakuumabwassersystem nach Anspruch 1, **dadurch gekennzeichnet, dass** die aktive Puffervorrichtung (10) eine Einfassung mit variablem Volumen und Mittel zum Ausdehnen des Volumens der Einfassung von einem ersten Modus zu einem zweiten Modus umfasst, und dass die Einfassung in Fluidverbindung durch einen Stromdurchlass (105) mit einer ersten Rohrleitung (31), die zwischen dem Steuermechanismus (5) und der Abwasserverrohrung (3) angeordnet ist, steht, um eine Saugwirkung durch den Stromdurchlass (105) auf die erste Rohrleitung (31) einzuleiten.

5. Vakuumabwassersystem nach Anspruch 4, **dadurch gekennzeichnet, dass** die Einfassung der aktiven Puffervorrichtung (10) ein starres, becherförmiges Teil (101), eine daran angebrachte flexible Membran (103) umfasst, und dass das Mittel zum Ausdehnen der Einfassung ein Federmittel (104) umfasst.

6. Vakuumabwassersystem nach Anspruch 4, **dadurch gekennzeichnet, dass** die Einfassung einen ausdehnbaren Balg (107), zwei gegenüberliegende flexible Membrane (109), die an einem rohrförmigen Mittel (108) angebracht sind, oder einen Zylinder (110) mit einem Kolben (111) umfasst, und dass das Mittel zum Ausdehnen des Volumens der Einfassung ein Federmittel (104) umfasst.

7. Vakuumabwassersystem nach Anspruch 4, **dadurch gekennzeichnet, dass** der Stromdurchlass (105) eine Düse (106) umfasst.

8. Vakuumabwassersystem nach Anspruch 1, **dadurch gekennzeichnet, dass** das Vakuumabwassersystem mehrere Abwasserbehältnisse umfasst, und dass die aktive Puffervorrichtung (10) separat innerhalb von einem oder mehr Abwasserbehältnissen (1) oder innerhalb einer Verschalung, die ein derartiges Abwasserbehältnis (1) umgibt, eingerichtet ist.

9. Vakuumabwassersystem nach Anspruch 1, **dadurch gekennzeichnet, dass** die aktive Puffervorrichtung (10) mit einem Auslösemittel versehen ist.

10. Vakuumabwassersystem nach Anspruch 1, **dadurch gekennzeichnet, dass** das Vakuumabwassersystem ein Aktivierungsmittel (6) zum Aktivieren der Funktion des Steuermechanismus (5) umfasst.

## Revendications

1. Système d'évacuation sous vide, comprenant un réceptacle d'eau usée (1), une canalisation d'égout (3) connectée au réceptacle d'eau usée au moyen d'une vanne de décharge (2), un moyen de génération de vide (4) pour générer du vide dans la canalisation d'égout, un mécanisme de commande (5) pour commander la vanne de décharge et un moyen tampon de vide, **caractérisé en ce que** le moyen tampon de vide comprend un dispositif de tampon actif (10) en communication de fluide avec le mécanisme de commande (5) et la canalisation d'égout (3), dans lequel le terme actif indique que le dispositif de tampon passe d'un premier mode à un second mode en créant du vide supplémentaire pour alimenter la vanne de décharge (2) lorsque, en cours d'utilisation, ladite vanne de décharge (2) est ouverte.

2. Système d'évacuation d'eau sous vide selon la revendication 1, **caractérisé en ce que** le mécanisme de commande (5) est en communication de fluide avec la canalisation d'égout (3) par l'intermédiaire d'une vanne de contrôle (32), que le mécanisme de commande (5) est conçu pour fournir du vide à la vanne de décharge (2) pour ouvrir la vanne de décharge afin de décharger le réceptacle d'eau usée (1), et que le dispositif de tampon actif (10) est disposé entre le mécanisme de commande (5) et la vanne de contrôle (32) afin de fournir du vide supplémentaire au mécanisme de commande (5) pour l'ouverture de la vanne de décharge (2).

3. Système d'évacuation d'eau sous vide selon la revendication 1, **caractérisé en ce que** le système d'évacuation d'eau sous vide comprend en outre une alimentation en eau (7) pour fournir de l'eau de rinçage au réceptacle d'eau usée (1), que l'alimentation en eau (7) est connectée à une buse d'eau de rinçage (9) disposée dans le réceptacle d'eau usée (1) via une vanne à eau (8), que le dispositif de commande (5) est conçu pour fournir du vide à la vanne à eau (8) pour ouvrir la vanne à eau afin de fournir de l'eau de rinçage au réceptacle d'eau usée et que le dispositif de tampon actif (10) est disposé entre le dispositif de commande (5) et la vanne de contrôle (32) afin de fournir du liquide supplémentaire au mécanisme de commande (5) pour l'ouverture de la vanne à eau (8).

4. Système d'évacuation d'eau sous vide selon la revendication 1, **caractérisé en ce que** le dispositif de tampon actif (10) comprend un caisson de volume variable et un moyen d'expansion du volume du caisson depuis un premier mode vers un second mode et **en ce que** le caisson est en communication de fluide avec un premier tube (31) disposé entre le mécanisme de commande (5) et la canalisation d'égout (3) par l'intermédiaire d'un port d'écoulement (105) afin d'induire un effet de succion avec le premier tube (31) via le port d'écoulement (105).

5. Système d'évacuation d'eau sous vide selon la revendication 4, **caractérisé en ce que** le caisson du dispositif de tampon actif (10) comprend une pièce en forme de coupe rigide (101), une membrane souple qui lui est rattachée (103), et **en ce que** le moyen d'expansion du volume du caisson comprend un moyen à ressort (104).

6. Système d'évacuation d'eau sous vide selon la revendication 4, **caractérisé en ce que** le caisson comprend un soufflet expansible (107), deux membranes souples opposées (109) rattachées à un moyen tubulaire (108), ou un cylindre (110) avec un piston (111), et **en ce que** le moyen d'expansion du volume du caisson comprend un moyen à ressort (104).

7. Système d'évacuation d'eau sous vide selon la revendication 4, **caractérisé en ce que** le port d'écoulement (105) comprend une buse (106).

8. Système d'évacuation d'eau sous vide selon la revendication 1, **caractérisé en ce que** le système d'évacuation d'eau sous vide comprend une pluralité de réceptacles d'eau usée et **en ce que** le dispositif de tampon actif (10) est installé séparément dans un ou plusieurs réceptacles d'eau usée (1) ou dans une coque renfermant un tel réceptacle d'eau usée (1).

9. Système d'évacuation d'eau sous vide selon la revendication 1, **caractérisé en ce que** le dispositif de tampon actif (10) est pourvu d'un moyen de déclenchement.

10. Système d'évacuation d'eau sous vide selon la revendication 1, **caractérisé en ce que** le système d'évacuation d'eau sous vide comprend un moyen d'activation (6) pour activer le fonctionnement du mécanisme de commande (5).
